# EUROPÄISCHE PATENTSCHRIFT

(11) **EP 2 453 555 B1**
(45) Veröffentlichungstag und Bekanntmachung des Hinweises auf die Patenterteilung: **08.02.2023**
(21) Anmeldenummer: 11002125.0
(22) Anmeldetag: 15.03.2011
(51) Int. Cl.: F04D 15/02, F04D 13/06, F04B 49/06, G05D 9/12, H02K 21/16, H02K 21/24, H02K 5/10, H02K 1/14, H02K 1/18, H02K 1/27, H02K 3/28, H02K 5/173, H02K 5/22, H02K 5/24, H02K 9/197, H02K 11/00, H02K 5/128

(54) **Pumpenaggregat**
Pump unit
Groupe motopompe

(30) Priorität: 11.11.2010 DE 102010051916; 11.11.2010 DE 102010051918
(43) Veröffentlichungstag der Anmeldung: 16.05.2012
(73) Patentinhaber: Grundfos Management a/s, 8850 Bjerringbro (DK)
(72) Erfinder: Blaser, Georg, 71679 Asperg (DE); Polzer, Rudolf Dr., 90547 Stein (DE)
(74) Vertreter: Patentanwälte Vollmann Hemmer Lindfeld Partnerschaft mbB

(56) Entgegenhaltungen:
- EP-A2- 1 203 886
- EP-A2- 2 040 350
- WO-A1-2008/150334
- WO-A1-2009/006927
- DE-A1- 2 262 867
- US-A- 4 043 706
- US-A1- 2002 098 089

## Beschreibung

Die Erfindung betrifft ein Umwälzpumpenaggregat mit einem Elektromotor, der einen Stator, einen Rotor und ein zwischen dem Stator und dem Rotor angeordnetes Spaltrohr aufweist, und einen mit dem Rotor verbundenen Laufrad. Derartige Umwälzpumpenaggregat finden zur Heizungs- und Brauchwasserumwälzung Verwendung. Die nasslaufenden Elektromotoren dieser Umwälzpumpenaggregate weisen zwischen Rotor und Spaltrohr Flüssigkeit auf, d.h. der Rotor läuft in der zu fördernden Flüssigkeit. Dies bedeutet, dass dann, wenn das Laufrad trockenläuft und keine Flüssigkeit mehr gefördert wird, auch der Rotorraum trockenlaufen kann. Dies ist ein Betriebszustand, welcher unerwünscht ist, da die Flüssigkeit gleichzeitig auch der Schmierung der Lager dient.

EP 1 203 886 A2 offenbart ein Pumpenaggregat mit einem nasslaufenden elektrischen Antriebsmotor. Bei diesem Pumpenaggregat ist im Strömungsweg durch das Pumpenaggregat ein Trockenlaufsensor angeordnet, der einen Zustand erkennt, in welchem keine Flüssigkeit durch das Pumpenaggregat gefördert wird. Abhängig von diesem Sensorsignal kann das Pumpenaggregat bzw. dessen Antriebsmotor angehalten werden, um eine Beschädigung der Lager zu vermeiden. Bei diesem Pumpenaggregat ist jedoch zur Trockenlauferkennung ein zusätzlicher Sensor erforderlich, welcher in den Strömungsweg einzubringen ist.

US 2002/0098089 A1 offenbart ebenfalls ein Pumpenaggregat mit einem nasslaufenden elektrischen Antriebsmotor, welches mit einem piezoelektrischen Sensor zur Trockenlauferkennung versehen ist. Auch bei diesem Stand der Technik ist somit, um eine Trockenlauferkennung zu ermöglichen, ein separater Sensor in den Strömungsweg einzubringen.

WO 2009/006927 A1 offenbart ein weiteres Verfahren zur Vermeidung eines Trockenlaufes einer Kreiselpumpe, gemäß welchem ein Flüssigkeitssensor am bzw. im Strömungsweg durch die Kreiselpumpe angeordnet ist, um zu erkennen, ob der Strömungsweg mit Flüssigkeit gefüllt ist oder nicht. D. h., auch bei diesem System ist die Anordnung eines zusätzlichen Sensors zur Trockenlauferkennung erforderlich.

Es ist Aufgabe der Erfindung, ein Umwälzpumpenaggregat mit einem nasslaufenden Elektromotor in der Weise weiterzuentwickeln, dass auf vereinfachte Weise eine Beschädigung der Lager durch Trockenlauf vermieden werden kann bzw. auf vereinfachte Weise ein Trockenlauf erkannt werden kann.

Diese Aufgabe wird durch ein Umwälzpumpenaggregat mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Erfindungsgemäß weist das Umwälzpumpenaggregat einen Elektromotor und zumindest ein von diesem angetriebenes Laufrad auf. Der Elektromotor weist in bekannter Weise einen Stator und einen Rotor mit einem zwischen diesem angeordneten Spaltrohr auf, sodass der Rotor in der zu fördernden Flüssigkeit laufen kann.

Erfindungsgemäß ist nun vorgesehen, dass der Elektromotor eine Motorelektronik aufweist, welche zur elektronischen Kommutierung des Elektromotors ausgebildet ist. Eine solche Motorelektronik weist vorzugsweise einen Frequenzumrichter zur Drehzahleinstellung des Elektromotors auf. Erfindungswesentlich ist, dass der Elektromotor und die Kommutierung derart ausgelegt sind, dass in einem Zustand, in weichem der Rotorraum im Inneren des Spaltrohrs nicht mit Flüssigkeit gefüllt ist, der Rotor anhält bzw. stehenbleibt. Alternativ oder zusätzlich sind der Elektromotor und die Kommentierung derart ausgelegt, dass in einem Zustand, in welchem das zumindest eine Laufrad trockenläuft, der Rotor anhält bzw. stehenbleibt. Dabei kann die Auslegung so gewählt sein, dass ein Stillstand des Rotors nur bei Trockenlauf des Laufrades, nur bei Trockenlauf des Rotors oder erst dann eintritt, wenn sowohl das Laufrad als auch der Rotor trocken laufen. Dadurch wird erreicht, dass der Elektromotor bei einem Trockenlauf, bei welchem sich keine Flüssigkeit zwischen Rotor und Spaltrohr befindet oder das Laufrad trockenläuft, automatisch anhält. Auf diese Weise können Schäden an der Lagerung aufgrund fehlender Schmierung durch die Flüssigkeit auf einfache Weise vermieden werden.

Die Flüssigkeit im Laufrad und die Flüssigkeit im Rotorraum erhöhen jeweils die auf den Elektromotor wirkende Last durch die auftretende Reibung bzw. den auftretenden Widerstand im Laufrad. Wenn ein Teil dieser Last wegfällt, ändert sich das Betriebsverhalten des Elektromo-tors.

Wenn nun der Elektromotor und die Kommutierung entsprechend ausgelegt sind, führt diese Änderung des Betriebsverhaltens dazu, dass ein Stillstand des Rotors bewirkt wird, d. h. dass der Rotor anhält. Erfindungsgemäß sind der Elektromotor und die Kommutierung derart ausgelegt, dass in einem Zustand, in welchem der Rotorraum im Inneren des Spaltrohrs und/oder das Laufrad nicht mit Flüssigkeit gefüllt ist, die Kommutierung aussetzt. Das Aussetzen der Kommutierung führt dann zum Anhalten des Rotors, sodass dieser stehenbleibt.

Die Kommutierung ist so ausgelegt, dass sie nur richtig erfolgt, wenn eine ausreichende Last auf den Motor wirkt, daher wird beim Wegfall eines Teiles der Last die Kommutierung aussetzten und somit der Elektromotor anhalten. Auf diese Weise wird auf sehr einfache Weise der Trockenlauf verhindert. Beim Anlauf des Elektromotors wird dieser, wenn das Laufrad trockenläuft und/oder der Rotorraum nicht mit Flüssigkeit gefüllt ist, zwar zunächst noch zwangsgesteuert anlaufen, aber auch dann wird, wenn der Motor in den geregelten Betrieb übergeht, die Kommutierung entsprechend aussetzen und der Motor wieder anhalten.

Gemäß einer bevorzugten Ausführungsform der Erfindung ist der Elektromotor als Kugelmotor mit einem Spaltrohr in Form einer Trennkalotte und einem halbkugelförmigen Rotor ausgebildet. Der Rotor ist bei dieser Ausgestaltung auf einer Kugeloberfläche gelagert und hat dem Spaltrohr bzw. der Trennkalotte zugewandt eine Außenkontur, welche kugelförmig ist, d. h. eine Form hat, welche einem Kugelabschnitt gleicht. Dabei ist die Außenkontur des Rotors in diesem Bereich idealerweise konzentrisch zur Kugeloberfläche des Lagers ausgebildet. Die Trennkalotte ist entsprechend konzentrisch ausgebildet. So ist es möglich, dass der Rotor um den Lagerpunkt im Inneren der Trennkalotte quer zu seiner Drehachse pendeln kann. So ist im Sinne der vorliegenden Erfindung unter einem Spaltrohr jegliches Trennelement zu verstehen, welches den Rotorraum vom Statorraum trennt, sei es ein rohrförmiges Trennelement, ein kalottenförmiges Trennelement oder in sonstiger Weise geformtes Trennelement, beispielsweise eine Scheibe.

Der Rotor weist weiter bevorzugt einen Polring aus Magnetmaterial auf, in welchen permanentmagnetische Rotorpole ausgebildet sind. Dieser Polring weist in der Richtung quer zu seiner umfänglichen Erstreckung vorzugsweise eine Breite auf, welche im Wesentlichen der Breite der gegenüberliegenden Statorpole entspricht. D.h. die Statorpole und die Rotorpole überdecken sich, wenn sie einander gegenüberliegen. Weiter bevorzugt weist der Stator mehrere Statorpolpaare" auf, welche jeweils von zwei benachbarten Statorpolen gebildet werden, die so ausgebildet sind, dass sie in radialer Richtung entgegengesetzt gepolte Magnetfelder erzeugen, und dass der Rotor eine Mehrzahl über den Umfang verteilter magnetischer Rotorpole aufweist und so ausgestaltet ist, dass ein magnetischer Fluss zwischen zwei benachbarten Rotorpolen möglich ist. Auf diese Weise wird erreicht, dass der magnetische Fluss nicht diametral durch den Rotor erfolgt, sondern zwischen den benachbarten Rotorpolen in Umfangsrichtung in dem Rotor, insbesondere in einen Polring, wie er vorangehend beschrieben wurde. Dies ermöglicht es, dass der Rotor nicht vollständig aus Magnetmaterial gefertigt werden muss, und auch keinen weichmagnetischen Kern aufweisen muss. So kann insgesamt ein leichterer Rotor ausgebildet werden. Es handelt sich bei diesem Motortyp um einen sogenannten short-fluxpath-Motor. Ein solcher Motor ist besonders für die vorangehend beschriebene erfindungsgemäße Auslegung von Elektromotor und Kommutierung geeignet, um den Betrieb in Trockenlauf zu verhindern.

Die Motorelektronik ist weiter erfindungsgemäss so ausgebildet, dass die Kommutierung auf Grundlage des Gegen-EMK (Gegen-Elektromagnetische Kraft) erfolgt. D.h. bei diesem Motor ist kein Sensor zur Ermittlung der Rotorposition erforderlich, die für die Kommutierung erforderliche Erfassung der Rotorposition erfolgt durch die Gegen-EMK.

Vorzugsweise ist die Motorelektronik derart ausgestaltet, dass die Kommutierung beim Starten des Motors bis zu einer vorbestimmten Drehzahl oder für eine vorbestimmte Zeit zwangsgesteuert erfolgt. D. h. beim Anlaufen des Motors erfolgt kein geregelter Betrieb, wie er beim normalen Betrieb des Motors erfolgt. Erst nach einer vorbestimmten Zeit oder beim Erreichen einer vorbestimmten Drehzahl geht der Motor in den geregelten Betrieb über, d. h. dann wird die Kommutierung geregelt betrieben, sodass der Motor vorzugsweise mit seiner Synchrondrehzahl läuft.

Weiter bevorzugt ist die Motorelektronik derart ausgestaltet, dass sie aus den aktuellen elektrischen Werten des Motors dessen Stillstand erfassen kann. Auf diese Weise sind keine zusätzlichen Sensoren erforderlich, um zu erfassen, ob der Rotor rotiert oder stillsteht. Vielmehr kann der Stillstand aus den elektrischen Größen von Strom und/oder Spannung, welche dem Stator des Elektromotors von der Motorelektronik zugeführt werden, erfasst werden.

Um eine sichere Inbetriebnahme des Elektromotors sicherzustellen, ist die Motorelektronik weiter bevorzugt so ausgebildet, dass sie einen Stillstand des Elektromotors erfassen kann und bei erfasstem Stillstand einen erneuten Startvorgang einleitet. Dies ist beispielsweise dann von Vorteil, falls der Motor aufgrund beispielsweise einer Luftblase in der Förderleitung einer von dem Motor angetriebenen Pumpe, kurzzeitig stillstehen sollte. in einem solchen Fall kann durch mehrere Startversuche dennoch eine sichere Inbetriebnahme erreicht werden.

Die Motorelektronik ist jedoch vorzugsweise derart ausgestaltet, dass sie nach einer bestimmten Zahl von Startvorgängen oder nach einer vorbestimmten Zeit, in welcher mehrere Startvorgänge vorgenommen werden, bei erneutem Stillstand des Elektromotors eine Fehlermeldung ausgibt. Ferner werden dann insbesondere weitere Startvorgänge abgebrochen. Dies ist beispielsweise dann sinnvoll, wenn eine manuelle Entlüftung der Förderleitung und der von dem Elektromotor angetriebenen Pumpe erforderlich ist. So kann für den Fall, dass das Spaltrohr mit Luft gefüllt sein sollte, zunächst eine Abfolge von mehreren Startversuchen von der Motorelektronik durchgeführt werden. Sollte es sich lediglich um eine geringe Luftmenge in dem Spaltrohr handeln, wird der Motor dann anlaufen und dann durch Inbetriebnahme des Motors und den Betrieb eines mit dem Rotor verbundenen Laufrades einer Pumpe das Spaltrohr wieder mit Flüssigkeit gefüllt. Dann geht der Motor wieder in seinen normalen Betrieb über. Sollte jedoch nicht nur der Motor, sondern z.B. auch eine sich anschließende Förder- bzw. Fluidleitung eine größere Luftmenge enthalten, ist möglicherweise ein normaler Betrieb des Motors trotz mehrmaliger Startvorgänge nicht möglich und der Motor bleibt wieder stehen. In diesem Fall gibt die Motorelektronik dann eine Fehlermeldung aus, um beispielsweise ein manuelles Entlüften der Leitung zu veranlassen.

Besonders bevorzugt handelt es sich um ein Heizungsumwälzpumpenaggregat oder ein Brauchwasserumwälzpumpenaggregat. Brauchwasserumwälzpumpenaggregate werden beispielsweise in der Warmwasserversorgung von Gebäuden eingesetzt, um das Warmwasser in den Warmwasserleitungen des Gebäudes zu zirkulieren, um so an den Zapfstellen stets warmes Wasser bereitstellen zu können.

Nachfolgend wird die Erfindung beispielhaft anhand der beigefügten Figuren beschrieben. In diesen zeigt:
- Fig. 1: ein Beispiel für ein erfindungsgemäßes Umwälzpumpenaggregat mit einem Elektromotor
- Fig. 2: eine geschnittene Detailansicht des Stators

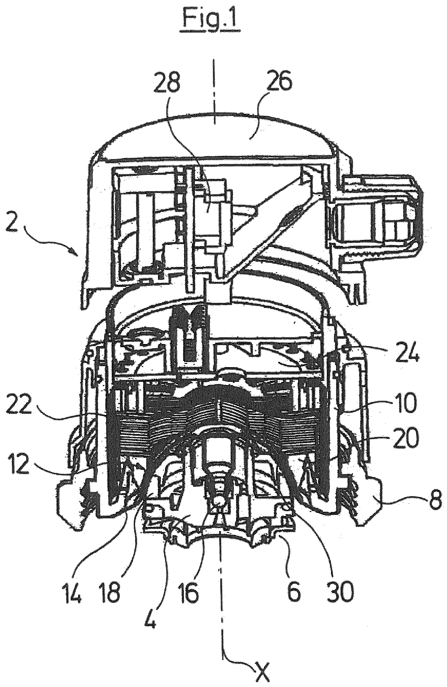

Die Figur 1 zeigt in einer teilweisen Explosionsansicht teilweise geschnitten den Elektromotor 2 eines Pumpenaggregates, wobei der Rotor 4 des Elektromotors 2 an einer Axialseite ein Laufrad 6 trägt. Dieses Laufrad 6 läuft in einem hier nicht gezeigten Pumpengehäuse, welches mit Hilfe der Überwurfmutter 8 mit dem Statorgehäuse 10 verbunden wird.

Bei dem Elektromotor 2 handelt es sich um einen nasslaufenden Elektromotor, bei welchem zwischen den Stator 12 und dem Rotor 4 ein Spaltrohr 14 in Form einer Trennkalotte angeordnet ist, welches den Rotorraum, in welchem sich der Rotor 6 dreht, von dem Statorraum im Inneren des Statorgehäuses 10, in welchem der Stator 12 angeordnet ist, trennt. Bei dem erfindungsgemäßen Motor handelt sich um einen Kugelmotor, welcher einen Rotor 4 mit einer halbkugelförmigen Oberfläche aufweist. Entsprechend ist auch das Spaltrohr 14 kalotten- bzw. halbkugelförmig geformt. Der Rotor 4 ist auf einer Lagerkugel 16 drehbar gelagert. Dies erlaubt es dem Rotor 4 sich nicht nur um die Längsachse X zu drehen, sondern auch um die Lagerkugel 16 radial zur Drehachse X zu pendeln. Dabei sind die kugelförmige Oberfläche des Rotors 4 und das kalottenförmige Spaltrohr 14 konzentrisch zueinander und zu der Lagerkugel 16 angeordnet.

Der Rotor 4 ist als Permanentmagnetrotor ausgebildet und weist einen Polring 18 aus Magnetmaterial auf. In diesem Polring 18 sind die Magnetpole des Rotors ausgebildet. Der Polring 18 liegt den endseitigen Stirnflächen der Polstege 20 des Stators 12 gegenüber. Dabei ist die Erstreckung in Breitenrichtung des Polringes 18 in etwa identisch zu der Erstreckung der Stirnenden der Polstege 20 entlang der kalottenförmigen Oberfläche des Spaltrohres 14 in Richtung quer zum Umfang. Die Polstege 20 tragen jeweils eine Spule 22. Die elektrischen Anschlüsse der Spulen 22 sind elektrisch mit einer im Inneren des Statorgehäuses 10 angeordneten Leiterplatte 24 verbunden. Diese Leiterplatte 24 trägt die Motorelektronik zur Ansteuerung und Kommutierung des Elektromotors. Die Motorelektronik auf der Leiterplatte 24 wird von einem Netzteil 28 mit Strom versorgt, welches in einem Anschlussgehäuse 26 angeordnet ist. Das Anschlussgehäuse 26 ist in Richtung der Drehachse X gesehen axialseitig an das Statorgehäuse 10 angesetzt.

Im normalen Betrieb des Pumpenaggregates ist der Innenraum des Spaltrohres 14 zwischen dem Spaltrohr 14 und der Oberfläche 30 des Rotors mit Flüssigkeit, insbesondere Wasser gefüllt. Die Flüssigkeit zwischen Spaltrohr und Rotor führt in diesem Bereich zu einer erhöhten Reibung und damit zu einem auf den Elektromotor wirkenden Lastanteil. Entsprechend erzeugt der Widerstand der Flüssigkeit in dem Laufrad 6 eine auf den Motor wirkende Last.

Die Motorelektronik ist erfindungsgemäß so ausgelegt, dass die elektronische Kommutierung des Elektromotors nur dann in der zum Betrieb des Elektromotors erforderlichen Weise erfolgt, wenn eine ausreichende Last auf den Elektromotor wirkt. So ist die Kommutierung so ausgelegt, dass sobald das Laufrad 6 trockenläuft und/oder das Spaltrohr nicht mit Flüssigkeit gefüllt ist und somit der Rotor 4 trockenläuft, die Last, welche auf den Elektromotor wirkt, um ein solches Maß verringert ist, dass die gewünschte Kommutierung nicht mehr erfolgt. D. h. in einem solchen Betriebszustand würde die elektronische Kommutierung aussetzen und der Elektromotor nicht weiter laufen. Die Motorelektronik auf der Leiterplatte 24 erkennt dies idealerweise und veranlasst in einem solchen Falle mehrere Startversuche. Sollte der Rotor 4 nach einer bestimmten Zeit oder einer bestimmten Anzahl von Startversuchen immer noch nicht in Rotation versetzt sein, wird von der Motorelektronik idealerweise eine Fehlermeldung ausgegeben und der Betrieb des Elektromotors zunächst ausgesetzt.

Die Kommutierung erfolgt in der Motorelektronik auf der Leiterplatte 24 vorzugsweise auf Grundlage der Gegen-EMK, welche bei Rotation des Rotors 4 in den Spulen 22 induziert wird.

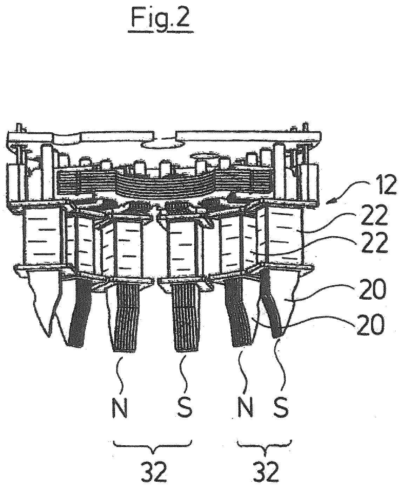

Figur 2 zeigt eine geschnittene Detailansicht des Stators 12. Die einzelnen Polstege 20 mit ihren Spulen 22 sind so verschaltet, dass immer zwei nebeneinander liegende Polstege 20 ein Statorpolpaar 32 bilden, wobei die Polstege 20 der Statorpolpaare 32 in entgegengesetzter Richtung magnetisch polarisiert sind, d.h. einer der Polstege 20 bildet einen magnetischen Nordpol N, während der andere Polsteg 20 einen magnetischen Südpol S bildet. Der Polring 18 des Rotors 4 weist ebenfalls abwechselnde magnetische Nord- und Südpole auf, welche hier nicht näher gezeigt sind. Aufgrund der ringförmigen Ausgestaltung des Polringes 18 ist ein magnetischer Fluss diametral durch den Rotor nicht möglich. Vielmehr ist der Rotor 4 so ausgebildet, dass ein magnetischer Fluss stets zwischen zwei benachbarten Rotorpolen, d.h. in Umfangsrichtung des Polringes 18 erfolgt. Besonders bevorzugt ist hier eine Halbach-Magnetisierung ausgebildet.

### Bezugszeichenliste

- 2: - Elektromotor
- 4: - Rotor
- 6: - Laufrad
- 8: - Überwurfmutter
- 10: - Statorgehäuse
- 12: - Stator
- 14: - Spaltrohr
- 16: - Lagerkugel
- 18: - Polring
- 20: - Polstege
- 22: - Spule
- 24: - Leiterplatte
- 26: - Anschlussgehäuse
- 28: - Netzteil
- 30: - Rotoroberfläche
- 32: - Statorpolpaare

- N: - Magnetischer Nordpol
- S: - Magnetischer Südpol
- X: - Drehachse

## Patentansprüche

1. Umwälzpumpenaggregat mit einem nasslaufenden Elektromotor, der einen Stator (12), einen Rotor (4) und ein zwischen dem Stator (12) und dem Rotor (4) angeordnetes Spaltrohr (14) aufweist, und zumindest einem mit dem Rotor verbundenen Laufrad (6), wobei der Rotor (4) in der zu fördernden Flüssigkeit läuft und die Flüssigkeit gleichzeitig auch zur Schmierung der Lager dient, wobei der Elektromotor eine Motorelektronik aufweist, welche zur elektronischen Kommutierung des Elektromotors ausgebildet ist, **dadurch gekennzeichnet, dass** die Motorelektronik derart ausgebildet ist, dass die Kommutierung auf Grundlage der Gegen-EMK erfolgt und wobei der Elektromotor und die Kommutierung derart ausgelegt sind, dass der Elektromotor zunächst zwangsgesteuert anläuft und dann, wenn der Elektromotor in den geregelten Betrieb übergeht, die Kommutierung nur richtig erfolgt, wenn eine ausreichende Last auf den Elektromotor wirkt, und dass in einem Zustand, in welchem der Rotorraum im Inneren des Spaltrohres (14) und/oder das Laufrad (6) nicht mit Flüssigkeit gefüllt ist, die Last, welche auf den Elektromotor wirkt, um ein solches Maß verringert ist, dass die gewünschte Kommutierung nicht mehr erfolgt und der Elektromotor automatisch anhält und somit ein Stillstand des Rotors (4) bewirkt wird.

2. Umwälzpumpenaggregat nach Anspruch 1, **dadurch gekennzeichnet, dass** der Elektromotor als Kugelmotor mit einem Spaltrohr (14) in Form einer Trennkalotte und einem halbkugelförmigen Rotor (4) ausgebildet ist.

3. Umwälzpumpenaggregat nach Anspruch 2, **dadurch gekennzeichnet, dass** der Rotor (4) derart gelagert ist, dass er neben einer Drehbewegung eine Pendelbewegung in radialer Richtung ausführen kann.

4. Umwälzpumpenaggregat nach einem der vorangehenden Ansprüche, **dadurch gekennzeichnet, dass** der Rotor (4) einen Polring (18) aus Magnetmaterial aufweist, in welchem permanetmagnetische Rotorpole ausgebildet sind.

5. Umwälzpumpenaggregat nach einem der vorangehenden Ansprüche, **dadurch gekennzeichnet, dass** der Stator (12) mehrere Statorpolpaare (32) aufweist, welche jeweils von zwei benachbarten Statorpolen (20) gebildet werden, die so ausgebildet sind, dass sie in radialer Richtung entgegengesetzt gepolte Magnetfelder erzeugen, und dass
der Rotor (4) eine Mehrzahl über den Umfang verteilter magnetischer Rotorpole aufweist und so ausgestaltet ist, dass ein magnetischer Fluss zwischen zwei benachbarten Rotorpolen möglich ist.

6. Umwälzpumpenaggregat nach einem der vorangehenden Ansprüche, **dadurch gekennzeichnet, dass** die Motorelektronik derart ausgestaltet ist, dass die Kommutierung bis zu einer vorbestimmten Drehzahl oder für eine vorbestimmte Zeit zwangsgesteuert erfolgt.

7. Umwälzpumpenaggregat nach einem der vorangehenden Ansprüche, **dadurch gekennzeichnet, dass** die Motorelektronik derart ausgestaltet ist, dass sie aus den aktuellen elektrischen Werten des Motors dessen Stillstand erfassen kann.

8. Umwälzpumpenaggregat nach einem der vorangehenden Ansprüche, **dadurch gekennzeichnet, dass** die Motorelektronik derart ausgebildet ist, dass sie einen Stillstand des Elektromotors erfassen kann und bei erfasstem Stillstand einen erneuten Startvorgang einleitet.

9. Umwälzpumpenaggregat nach einem der vorangehenden Ansprüche, **dadurch gekennzeichnet, dass** die Motorelektronik derart ausgestaltet ist, dass sie nach einer bestimmten Zahl von Startvorgängen oder nach einer vorbestimmten Zeit bei Stillstand des Elektromotors eine Fehlermeldung ausgibt.

10. Umwälzpumpenaggregat nach einem der vorangehenden Ansprüche, **dadurch gekennzeichnet, dass** es als Heizungs- oder Brauchwasser-Umwälzpumpenaggregat ausgebildet ist.

## Claims

1. A circulation pump unit having a wet-running electric motor, which has a stator (12), a rotor (4) and a can (14) arranged between the stator (12) and the rotor (4), and at least one impeller (6) connected to the rotor, the rotor (4) running in the liquid to be conveyed and the liquid also being used at the same time for lubricating the bearings, the electric motor having motor electronics which are designed for electronically commutating the electric motor, **characterized in that** the motor electronics are designed in such a manner, that the commutation takes place on the basis of counter EMF and wherein the electric motor and the commutation are designed such that the electric motor initially starts in a positively controlled manner and then, when the electric motor transitions to regulated operation, the commutation only takes place properly if sufficient load is acting on the electric motor, and **in that** in a state, in which the rotor chamber in the interior of the can (14) and/or the impeller (6) is not filled with liquid, the load, which is acting on the electric motor, is reduced to such an extent that the desired commutation no longer takes place and the electric motor automatically stops and thus a stoppage of the rotor (4) is effected.

2. The circulation pump unit according to Claim 1, **characterized in that** the electric motor is designed as a spherical motor with a can (14) in the form of a separating cap and a hemispherical rotor (4).

3. The circulation pump unit according to Claim 2, **characterized in that** the rotor (4) is mounted in such a manner that in addition to a rotational movement, it can execute a reciprocating movement in the radial direction.

4. The circulation pump unit according to one of the preceding claims, **characterized in that** the rotor (4) has a pole ring (18) made from magnetic material, in which permanent magnetic rotor poles are formed.

5. The circulation pump unit according to one of the preceding claims, **characterized in that** the stator (12) has a plurality of stator pole pairs (32), which are in each case formed from two adjacent stator poles (20), which are constructed such that they generate magnetic fields of opposite polarity in the radial direction, and **in that** the rotor (4) has a plurality of magnetic rotor poles distributed over the circumference and is configured such that a magnetic flux is possible between two adjacent rotor poles.

6. The circulation pump unit according to one of the preceding claims, **characterized in that** the motor electronics are configured in such a manner that the commutation takes place in a positively controlled manner until a predetermined rotational speed or for a predetermined time.

7. The circulation pump unit according to one of the preceding claims, **characterized in that** the motor electronics are configured in such a manner that they can detect the stoppage of the motor from the current electrical values thereof.

8. The circulation pump unit according to one of the preceding claims, **characterized in that** the motor electronics are designed in such a manner that they can detect a stoppage of the electric motor and introduce a renewed starting process in the event of a detected stoppage.

9. The circulation pump unit according to one of the preceding claims, **characterized in that** the motor electronics are configured in such a manner that they emit a fault notification after a certain number of starting processes or after a predetermined time in the event of stoppage of the electric motor.

10. The circulation pump unit according to one of the preceding claims, **characterized in that** it is constructed as a heating or service water circulation pump unit.

## Revendications

1. Groupe motopompe de circulation avec un moteur électrique à fonctionnement lubrifié, qui comprend un stator (12), un rotor (4) et un tube d'entrefer (14) disposé entre le stator (12) et le rotor (4), et au moins une roue (6) reliée au rotor, le rotor (4) passant dans le liquide à transporter et le liquide servant simultanément également à lubrifier les paliers, le moteur électrique comprenant une électronique de moteur qui est conçue pour une commutation électronique du moteur électrique, **caractérisé en ce que** l'électronique de moteur est conçue de telle sorte que la commutation survienne sur la base de la force contre-électromotrice, EMK, et le moteur électrique et la commutation étant conçus de telle sorte que le moteur électrique démarre d'abord sous commande forcée et ensuite, lorsque le moteur électrique passe en mode de fonctionnement régulé, la commutation ne survienne correctement que lorsqu'une charge suffisante agit sur le moteur électrique, et **en ce que** dans un état dans lequel l'espace de rotor à l'intérieur du tube d'entrefer (14) et/ou la roue (6) n'est pas rempli de liquide, la charge agissant sur le moteur électrique est réduite d'une manière telle que la commutation souhaitée ne survienne pas et que le moteur électrique s'arrête automatiquement et provoque ainsi un arrêt du rotor (4).

2. Groupe motopompe de circulation selon la revendication 1, **caractérisé en ce que** le moteur électrique est réalisé sous la forme d'un moteur à bille avec un tube d'entrefer (14) sous la forme d'une calotte de séparation et un rotor hémisphérique (4).

3. Groupe motopompe de circulation selon la revendication 2, **caractérisé en ce que** le rotor (4) est monté de manière à pouvoir effectuer, en plus d'un mouvement de rotation, un mouvement d'oscillation dans une direction radiale.

4. Groupe motopompe de circulation selon l'une quelconque des revendications précédentes, **caractérisé en ce que** le rotor (4) comprend une bague polaire (18) en matériau magnétique dans laquelle sont formés des pôles de rotor magnétiques permanents.

5. Groupe motopompe de circulation selon l'une quelconque des revendications précédentes, **caractérisé en ce que** le stator (12) comprend plusieurs paires de pôles de stator (32) qui sont formées respectivement par deux pôles de stator voisins (20) qui sont conçus de telle sorte qu'ils génèrent des champs magnétiques de polarité opposée dans une direction radiale, et **en ce que**
le rotor (4) comprend une pluralité de pôles de rotor magnétiques répartis sur la circonférence et est conçu de manière à permettre un flux magnétique entre deux pôles de rotor voisins.

6. Groupe motopompe de circulation selon l'une quelconque des revendications précédentes, **caractérisé en ce que** l'électronique de moteur est conçue de telle manière que la commutation soit commandée de manière forcée jusqu'à une vitesse de rotation prédéterminée ou pendant un temps prédéterminé.

7. Groupe motopompe de circulation selon l'une quelconque des revendications précédentes, **caractérisé en ce que** l'électronique de moteur est conçue de telle manière qu'elle puisse détecter l'arrêt du moteur à partir des valeurs électriques actuelles de celui-ci.

8. Groupe motopompe de circulation selon l'une quelconque des revendications précédentes, **caractérisé en ce que** l'électronique de moteur est conçue de telle manière qu'elle puisse détecter un arrêt du moteur électrique et qu'elle déclenche un nouveau processus de démarrage lorsque l'arrêt est détecté.

9. Groupe motopompe de circulation selon l'une quelconque des revendications précédentes, **caractérisé en ce que** l'électronique de moteur est conçue de telle manière qu'elle émette un message d'erreur après un nombre déterminé de processus de démarrage ou après un temps prédéterminé à l'arrêt du moteur électrique.

10. Groupe motopompe de circulation selon l'une quelconque des revendications précédentes, **caractérisé en ce qu'**il est réalisé sous la forme d'un groupe motopompe de circulation d'eau de chauffage ou de service.
